# EUROPEAN PATENT SPECIFICATION

(11) **EP 0 568 508 B1**
(45) Date of publication and mention of the grant of the patent: **05.11.1997**
(21) Application number: 93850071.7
(22) Date of filing: 05.04.1993
(51) Int. Cl.: H01H 35/18, G01F 23/30

(54) **Level sensor**
Niveaufühler
Détecteur de niveau

(30) Priority: 28.04.1992 SE 9201303
(43) Date of publication of application: 03.11.1993
(73) Proprietor: ITT Flygt Aktiebolag, S-171 25 Solna (SE)
(72) Inventor: Södergard, Bengt, S-194 41 Upplands Väsby (SE)
(74) Representative: Larsson, Sten

(56) References cited:
- DE-B- 2 843 484
- FR-A- 2 180 495
- US-A- 4 084 073

## Description

The invention concerns an electric level sensor for measuring the level in a liquid tank and which generates signals to a unit for controlling various functions. The invention is especially meant to be used in sewage pump stations for starting/stopping pumps, initiating alarm etc.

A level sensor for this purpose is previously known which is designed as a free hanging, hollow and water tight body having such a weight allocation, that the body takes different angles with relation to the vertical line depending on if it is surrounded by liquid or air. A mercury switch within the body will then connect/disconnect an electric circuit in dependence of the elevation. An example on such a sensor is shown in US Pat No 3183 323.

A main disadvantage with this indicator is that mercury is no longer allowed for environment reasons in some applications.

The Swedish Patent application 8405668-0 describes a level sensor where the mercury switch has been replaced by a so-called micro switch which is influenced by a loose weight within the body which weight takes different positions in dependence of the elevation.

This solution is however not entirely reliable, mainly because of the strong currents which are frequent in a pump station and which treat the level sensor quite roughly. The weight may then get stuck in one of its positions which will cause fault functions.

The Swedish Patent No 449537 describes another solution including a micro switch where the sensor always takes a vertical position. Because of the reasons mentioned above, the rough treatment may cause fault functions.

The German Patent No 270 6457 describes a solution where a material in powder form displaces a membrane which is utilized for connecting/disconnecting a switch in a level sensor, while the Swedish Patent No 335 568 shows the use of a ball for the same purpose. These known devices have in common that they are meant to float on the liquid surface which could risk fault functions as floating pollutions in the liquid may stick to the sensor.

The US Patent No 4084073, (which discloses a sensor according to the preamble of claim 1), the German Patent No 2843484 and the French Patent No 2180495 show sensors which are attached to the device to be monitored via a lead, the latter controlling the movement of the switch and preventing it from floating freely. Said levers however, very easily obtain layers of pollutions which change the balance and cause faults.

The invention is thus meant to obtain a free hanging level sensor which does not contain any material that is dangerous to the environment and which also is so designed that is has a faultless function, even when it is exposed to heavy strain in its operation environment.

The problem is solved by help of the device stated in claim 1.

The invention is described more closely below with reference to the enclosed drawings where Figs 1 and 2 show the level sensor in two different positions, while Fig 3 shows a cut through the interior of the sensor.

In the drawings 1 stands for a hollow body, 2 an electric cable having a water tight entry 3 and an entry release 4. 5 stands for a connection disc with lugs 6. 7 stands for connection screws, 8 an axis, 9 a balancing weight and 10 its center of gravity. 11, 12, 13 and 14 stand for surfaces on the balancing weight 9, 15 a micro switch with a resilient actuating yoke 16 and 17 finally, the conductors of the electric cable.

As previously mentioned, the weight and the volume of the hollow body is adapted to the density of the liquid to be supervised in such a way, that the body takes a strongly inclined position with regard to the vertical line when it is surrounded by the liquid. When the body is surrounded by air on the other hand, it takes a mainly vertical position.

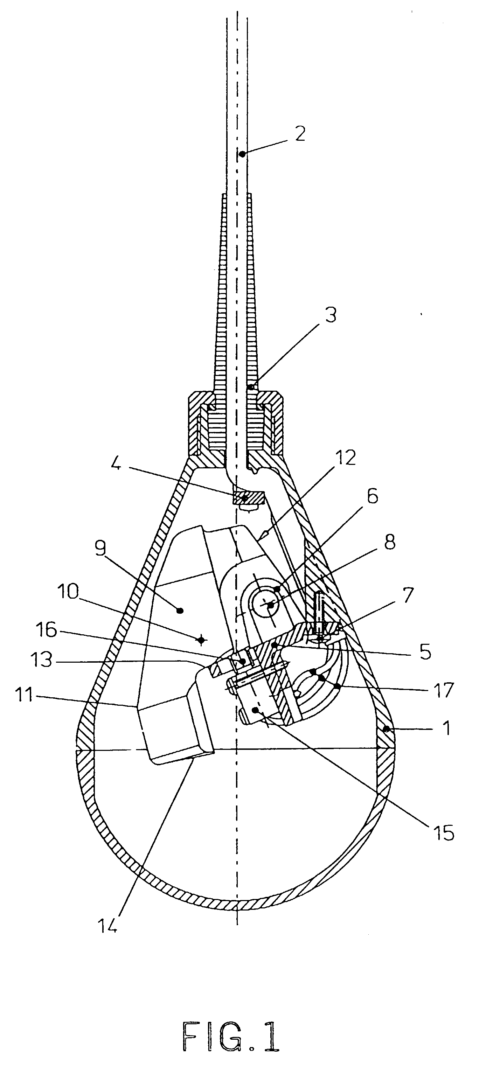

In the position shown in Fig 1, the body is thus entirely or almost entirely surrounded by air. The center of gravity 10 for the balancing weight 9 is then situated to the left of the bearing 6, 8 and the balancing weight thus tries to turn anti-clockwise around its bearing. The turning movement is stopped when one of the surfaces makes contact with the left hand edge of the disc 5. Just before the balancing weight reaches this position, its surface 13 has actuated the resilient yoke 16 on the micro switch 15 attached to the disc 5 in such a way that an electric circuit in the micro switch is connected or disconnected.

As long as the level sensor is mainly surrounded by air - as long as the water level in the sewage station is below the sensor - the latter keeps an upright position and the micro switch keeps its connected or disconnected position.

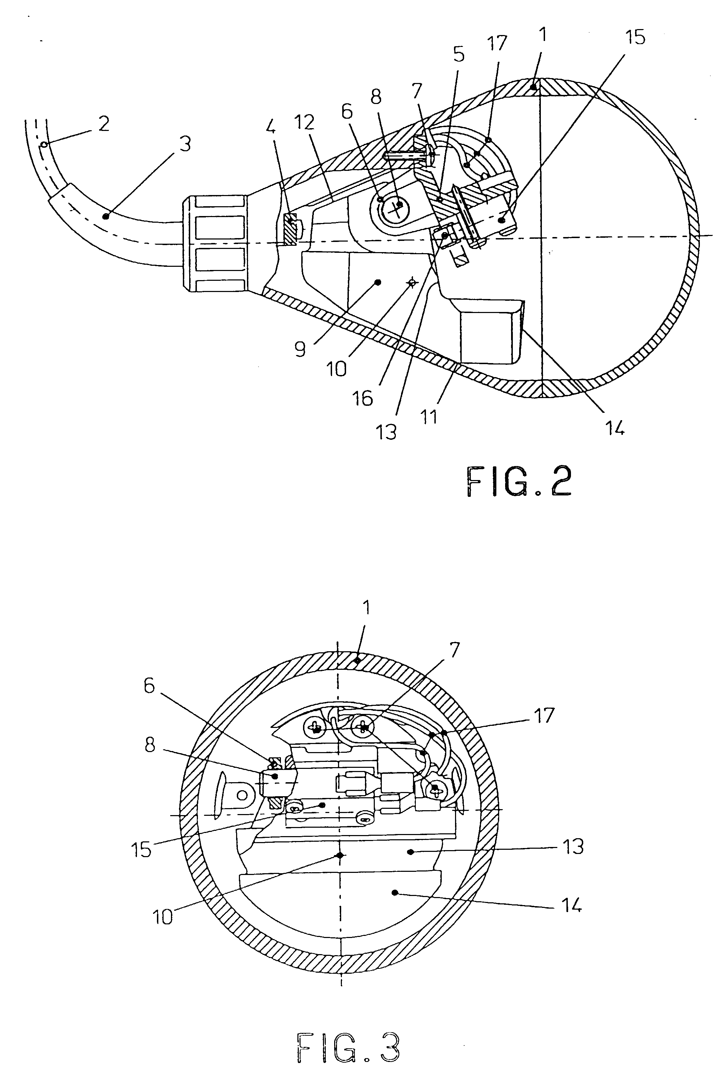

When the water level start to rise, the level sensor will eventually begin to tilt and finally reach a mainly horizontal position, Fig 2. By a suitable choice of volume and weight, the sensor will take this horizontal position independent of how high the water level rises above the sensor.

When the sensor starts nearing its horizontal position the balancing weight 9, which then has its center of gravity 10 below and to the right of the bearing 6, 8, will turn clockwise around the latter. This rotation is limited by one of the surfaces of the balancing weight 9 making contact with the inner surface of the hollow body 1. During this movement the surface 13 of the balancing weight looses its contact with the disc 5 and with the resilient yoke 16. The micro switch is than actuated to take its other position which means that the switch is connected or disconnected.

In order to secure distinct stops with the micro switch, the balancing weight 9 is relatively heavy and constitutes a considerable part of the total weight of the level sensor. At the same time however, the sensor must not be too heavy for manufacturing reasons. A minimum value to obtain an acceptable security is 30% of the total weight, but a suitable value is between 50 and 80%. In addition, the total weight/volume relation for the sensor shall be chosen with regard to the density of the liquid to be supervised to secure that the level sensor takes a mainly horizontal position when it is surrounded by the liquid.

By help of the invention a level sensor is obtained which combines the reliability of the known mercury switch sensor with recent demands for a non-poisonous environment. The level sensor can be used in many fields to connect and disconnect electric circuits for starting and stoping of pumps, for generating alarm etc. A specific advantage with using the relatively heavy balancing weight to actuate the micro switch is that the latter may be designed with a hight disconnecting ability which means that the sensor can be used for controlling relatively strong currents.

## Claims

1. A level sensor for connecting/disconnecting of an electric function such as starting/stopping the motor in an electrically driven pump in dependence of the level of the pumped medium, comprising a hollow body (1) attached to and hanging free from an electric cable (2) which is connected to a micro switch (15) arranged, within the hollow body, the switch being actuated to a connected/ disconnected position by help of a movable weight arranged within the body, wherein the weight, designed as a balancing weight (9), is supported in the hollow body and turnable between two distinct end positions, and one of the surfaces of the balancing weight is arranged to actuate the micro switch (15) directly or indirectly, characterized in that the level sensor has a drop formed symmetrical configuration, in that the balancing weight (9), the weight of which is at least 30% of the total weight of the sensor when surrounded by air, has its center of gravity (10) beside the central vertical line through the sensor when the latter is surrounded by air taking a mainly vertical position and in that the sensor is tilted away from vertical position and still hangs free from the electrical cable (2) when immersed in liquid.

2. A level sensor according to claim 1, characterized in the weight of the balancing weight (9) is between 50 and 80 % of the total weight of the level sensor when surrounded by air.

3. A level sensor according to claim 1, characterized in that the end positions of the balancing weight (9) are decided by its surfaces making contacts with stationary parts in the hollow body (1), the balancing weight, in one of its end positions, actuating a resilient yoke (16) which in its turn actuates the micro switch (15) to connect/disconnect an electric cicuit.

4. A level sensor according to claim 2, characterized in that when the balancing weight (9) takes one of its end positions, its bottom surface (13) makes contact with a connection disc (5) attached to the hollow body (1) and which supports the micro switch (15) and that when the balancing weight (9) takes its other end psition, one of its side surfaces (11,12) makes contact with the inner surface of the hollow body (1).

5. A level sensor according to claim 1, characterized in that the balancing weigt takes one of its end positions when the hollow body takes a mainly vertical position, while the balancing weight takes its other end position when the hollow body is mainly horizontally oriented.

## Patentansprüche

1. Niveausensor zum Einschalten/Ausschalten einer elektrischen Funktion, wie Starten/Stoppen des Motors bei einer elektrisch betriebenen Pumpe in Abhängigkeit von dem Niveau des umgepumpten Mediums, mit einem hohlen Körper (1), der an einem elektrischen Kabel (2) angebracht ist und frei von diesem herabhängt, wobei das Kabel mit einem im Inneren des hohlen Körpers angeordneten Mikroschalter (15) verbunden ist, wobei der Schalter mit Hilfe eines im Inneren des Körpers angeordneten beweglichen Gewichts in eine eingeschaltete/ausgeschaltete Position gebracht wird, wobei das als Ausgleichsgewicht (9) ausgebildete Gewicht in dem hohlen Körper gehaltert ist und zwischen zwei separaten Endpositionen verschwenkbar ist und wobei eine der Oberflächen des Ausgleichsgewichts zum direkten oder indirekten Betätigen des Mikroschalters (15) ausgelegt ist,
dadurch gekennzeichnet, daß der Niveausensor eine tropfenförmige symmetrische Konfiguration aufweist, daß das Ausgleichsgewicht (9), dessen Gewicht wenigstens 30 % des Gesamtgewichts des Sensors bei Umgebung desselben von Luft ausmacht, mit seinem Schwerpunkt (10) neben der zentralen vertikalen Linie durch den Sensor angeordnet ist, wenn letzterer von Luft umgeben ist und eine im wesentlichen vertikale Position einnimmt, und daß der Sensor bei Eintauchen desselben in Flüssigkeit von der vertikalen Position weggekippt wird und dabei immer noch frei von dem elektrischen Kabel (2) hängt.

2. Niveausensor nach Anspruch 1,
dadurch gekennzeichnet, daß das Gewicht des Ausgleichsgewichts (9) zwischen 50 und 80 % des Gesamtgewichts des Niveausensors bei Umgebung desselben von Luft beträgt.

3. Niveausensor nach Anspruch 1,
dadurch gekennzeichnet, daß die Endpositionen des Ausgleichsgewichts (9) durch seine Oberflächen bestimmt werden, die mit stationären Teilen in dem hohlen Körper (1) in Berührung treten, wobei das Ausgleichsgewicht in seiner einen Endposition ein federnd nachgiebiges Joch (16) betätigt, das wiederum den Mikroschalter (15) betätigt, um eine elektrische Schaltung einzuschalten/auszuschalten.

4. Niveausensor nach Anspruch 2,
dadurch gekennzeichnet, daß dann, wenn das Ausgleichsgewicht (9) seine eine Endposition einnimmt, seine Bodenfläche (13) mit einer Verbindungsscheibe (5) in Berührung tritt, die an dem hohlen Körper (1) angebracht ist und an der der Mikroschalter (15) gehaltert ist, und daß dann, wenn das Ausgleichsgewicht (9) seine andere Endposition einnimt, eine seiner Seitenflächen (11, 12) mit der Innenfläche des hohlen Körpers (1) in Berührung tritt.

5. Niveausensor nach Anspruch 1,
dadurch gekennzeichnet, daß das Ausgleichsgewicht eine seiner Endpositionen einnimmt, wenn der hohle Körper eine im wesentlichen vertikale Position einnimmt, während das Ausgleichsgewicht seine andere Endposition einnimmt, wenn der hohle Körper im wesentlichen horizontal ausgerichtet ist.

## Revendications

1. Capteur de niveau pour connecter/déconnecter une fonction électrique telle que le démarrage/l'arrêt du moteur dans une pompe entraînée électriquement en fonction du niveau du milieu pompé, comprenant un corps creux (1) fixé à et pendant de manière libre depuis un câble électrique (2) qui est relié à un micro-commutateur (15) agencé dans le corps creux, le commutateur étant actionné vers une position connectée/déconnectée au moyen d'un poids déplaçable agencé dans le corps, dans lequel le poids, conçu comme un poids d'équilibrage (9) est supporté dans le corps creux et rotatif entre deux positions d'extrémité distinctes, et l'une des surfaces du poids d'équilibrage est agencé pour actionner le micro-commutateur (15) directement ou indirectement, caractérisé en ce que le capteur de niveau a une configuration symétrique formée en goutte, en ce que le poids d'équilibrage (9) dont le poids est au moins 30 % du poids total du capteur lorsqu'il est entouré par de l'air, a son centre de gravité (10) à côté de la ligne verticale centrale à travers le capteur lorsque ce dernier est entouré par de l'air prenant une position principalement verticale et en ce que le capteur est incliné depuis la position verticale et pend toujours de manière libre depuis le câble électrique (2) lorsqu'il est immergé dans du liquide.

2. Indicateur de niveau selon la revendication 1, caractérisé en ce que le poids du poids d'équilibrage (9) est entre 50 et 80 % du poids total du capteur de niveau lorsqu'il est entouré par de l'air.

3. Capteur de niveau selon la revendication 1, caractérisé en ce que les positions d'extrémité du poids d'équilibrage (9) sont décidées par ses surfaces faisant contact avec des parties immobiles du corps creux (1), le poids d'équilibrage, dans une de ses positions d'extrémité actionnant un étrier élastique (10) qui, à son tour, actionne le micro-commutateur (15) pour connecter/déconnecter un circuit électrique.

4. Capteur de niveau selon la revendication 2, caractérisé en ce que, lorsque le poids d'équilibrage (9) prend l'une de ses positions d'extrémités, sa surface de fond (13) entre en contact avec un disque de connexion (5) attaché au corps creux (1) et qui supporte le micro-commutateur (15) et en ce que, lorsque le poids d'équilibrage (9) prend son autre position d'extrémité, l'une de ses surfaces latérales (11, 12) entre en contact avec la surface intérieure du corps creux (1).

5. Capteur de niveau selon la revendication 1, caractérisé en ce que le poids d'équilibrage prend l'une de ses positions d'extrémité lorsque le corps creux prend une position essentiellement verticale, tandis que le poids d'équilibrage prend son autre position d'extrémité lorsque le corps creux est orienté essentiellement horizontalement.
